# EUROPÄISCHE PATENTSCHRIFT

(11) **EP 2 109 655 B1**
(45) Veröffentlichungstag und Bekanntmachung des Hinweises auf die Patenterteilung: **16.07.2014**
(21) Anmeldenummer: 08701509.5
(22) Anmeldetag: 15.01.2008
(51) Int. Cl.: C10L 5/44, C10L 5/00, C10L 5/34

(54) **VERFAHREN ZUR HERSTELLUNG EINES BRENNSTOFFS MIT ZUSATZSTOFF**
PROCESS FOR PREPARATION OF A FUEL WITH ADDITIVE
PROCÉDÉ DE PRÉPARATION DE COMBUSTIBLE AVEC ADDITIF

(30) Priorität: 16.01.2007 EP 07000823; 05.02.2007 EP 07002467; 31.08.2007 EP 07115434
(43) Veröffentlichungstag der Anmeldung: 21.10.2009
(73) Patentinhaber: Earthfly Holding GmbH, 6020 Innsbruck (AT)
(72) Erfinder: PEER, Thomas, A-6068 Mils bei Hall in Tirol (AT)
(74) Vertreter: Kilian Kilian & Partner
(86) Internationale Anmeldenummer: PCT/EP2008/050407
(87) Internationale Veröffentlichungsnummer: WO 2008/087144

(56) Entgegenhaltungen:
- WO-A-96/14372
- US-A- 4 443 227
- US-A1- 2004 200 136

## Beschreibung

Die Erfindung betrifft einen Brennstoff und ein Verfahren zur Herstellung dieses Brennstoffes.

Fossile Brennstoffe in fester Form und Brennstoffe aus Biomasse sind seit langem bekannt. Diese Brennstoffe werden in vielen Industriezweigen für unterschiedlichste Anwendungen benötigt, kommen aber hauptsächlich bei der Erzeugung elektrischer Energie oder von Wärme in Kraftwerken oder zu Heizzwecken in privaten Bereichen zum Einsatz.

Aufgrund der größer werdenden Knappheit und den steigenden Kosten für Brennstoffe werden Anstrengungen unternommen, den Heizwert der Brennstoffe durch Zusatzstoffe zu erhöhen.

Aus US 4443227 ist es bekannt, Kohle mit einem Zusatzstoff auf Fettsäurebasis zu behandeln und WO 96/14372 offenbart einen Brennstoff aus organischen Materialien, der ebenfalls einen Zusatzstoff auf Fettsäurebasis aufweist. Insbesondere offenbart die WO 96/14372 einen Brennstoff, der einen Ausgangsstoff und einen Zusatzstoff, umfassend eine Palmitinsäure und eine Stearinsäure, aufweist, wobei nähere Angaben über die Anteile der Bestandteile des Zusatzstoffes in der WO 96/14372 nicht gemacht sind.

Es ist Aufgabe der Erfindung, einen Brennstoff mit einem den Heizwert erhöhenden Zusatzstoff, der Wassereinlagerungen vollständig verhindert, der keinen Abrieb aufweist und der leicht gehandhabt werden kann, zu schaffen.

Diese Aufgabe wird mit einem Verfahren zur Herstellung eines Brennstoffes gemäß Patentanspruch 1 gelöst. Vorteilhafte Weiterbildungen und Ausgestaltungen der Erfindung ergeben sich aus den abhängigen Ansprüchen.

Grundgedanke der Erfindung ist es, einen Brennstoff mit einem Zusatzstoff, der den Heizwert erhöht und aushärtet, zu behandeln.

Im Folgenden werden der erfindungsgemäße Brennstoff und eine bevorzugte Zusammensetzung des Zusatzstoffes beschrieben. Als (nicht beanspruchter) fossiler Ausgangsstoff für den Brennstoff kann zum Beispiel Kohle gewählt werden, wobei alle Kohlearten z. B. Steinkohle, Braunkohle oder Holzkohle hierfür zur Verfügung stehen.

Erfindungsgemäß weist der Brennstoff den Ausgangsstoff in Form von Holz oder Holzkleinteilen auf.

Als (nicht beanspruchte) Alternative zu einem fossilen Ausgangsstoff ist jede Art von Biomasse als Ausgangsstoff geeignet. Nicht abschließende Beispiele hierfür sind Getreide wie Weizen, Reis, Mais, Roggen, Gerste, Hafer oder Hirse, Stärke z.B. aus Bohnen, Erbsen oder Kartoffeln, Stroh, alle Arten von Kernen wie Olivenkerne, Palmölkerne, Sonnenblumenkerne, Kürbiskerne, und alle zellulosehaltigen Stoffe.

Vorzugsweise wird der Brennstoff in Formstücke gepresst, wobei diese Formstücke jede mögliche Gestalt aufweisen können. Als gut geeignete Formen haben sich sog. Brickets oder Pellets durchgesetzt.

Vor dem Pressvorgang kann der Ausgangsstoff in einer beliebigen Form, d.h. in Pulverform, als Kleinteile etc., vorliegen.

Es ist selbstverständlich, dass auch Mischungen aus Steinkohle, Braunkohle, Holzkohle, und den Biomassen geeignet sind.

In dem Prozess wird der Ausgangsstoff oder die Mischung derer unter hohem Druck in die gewünschte Form gepresst.

Der im erfindungsgemäßen Verfahren angewendete Zusatzstoff, der dem Ausgangsstoff zugegeben wird, umfasst Palmitinsäure, Stearinsäure, Laurinsäure, Myristinsäure und Ölsäure und weist folgende Anteile auf:
min 50 Palmitinsäure
min 40 Stearinsäure
maximal 3% Myristinsäure
maximal 1% Laurinsäure
und Spuren von Ölsäure.

Bei den %-Angaben kann es sich sowohl um Gewichts-% als auch um Volumen-% handeln.

In dieser Zusammensetzung liegt der Zusatzstoff in einer festen, nicht fettenden Form vor, während er die gleiche den Heizwert erhöhende Eigenschaft wie im Stand der Technik aufweist. Aus diesem Grund können sich in dem mit diesem Zusatzstoff behandelten Brennstoff keine Wassereinlagerungen mehr bilden und die Oberfläche des Brennstoffes ist vor Abrieb oder Rissbildung geschützt, was das Zerbrechen des Brennstoffs während des Transports verringert. Es kommt folglich zu keinerlei Verlusten an Ausgangs- oder Zusatzstoff.

Vorteilhaft ist weiterhin, dass der Brennstoff in keiner besonderen Verpackung gelagert oder transportiert werden muss, da der Brennstoff weder den Zusatzstoff abfettend verliert noch jegliche Art von Staub abgibt, und der Anwender des Brennstoffes keine Schutzmaßnahmen gegen Verunreinigungen an Kleidung und Händen ergreifen muss.

Wird zum Beispiel Grillkohle erfindungsgemäß mit dem Zusatzstoff behandelt, verbessert dieser sowohl das Anfeuerverhalten als auch den Umgang mit der Grillkohle, weil keine Verunreinigungen an den Händen zu befürchten sind.

Darüber hinaus verhindert diese Kapselung durch den Zusatzstoff jegliche Bildung von Feinstaub, wodurch eine die Gesundheit des Anwenders nicht gefährdende Handhabung des Brennstoffes möglich ist. Sollte lediglich eine Erhöhung des Heizwertes von Interesse sein, kann die obige Zusammensetzung des Zusatzstoffs beliebig verändert werden.

Im Folgenden wir ein Verfahren zur Herstellung dieses speziellen Brennstoffes erläutert.

Bei der Herstellung des Brennstoffes kann der Zusatzstoff sowohl in fester als auch flüssiger Form verarbeitet werden. In fester Form wird der Zusatzstoff in Flockenform oder Pulverform mit dem Ausgangsstoff, der in einer beliebigen Form vorliegen kann, vermengt. Nach Herstellung einer gleichmäßigen Mischung wird diese unter hohem Druck in eine bestimmte Form gepresst. Bei dieser Pressung verteilt sich der Zusatzstoff innerhalb der Formstücke homogen und bildet auf deren Oberflächen eine Schutzschicht.

Alternativ kann der Zusatzstoff vor der Anwendung über seinen spezifischen Schmelzpunkt erhitzt und in flüssiger Form verwendet werden. Der spezifische Schmelzpunkt der oben erwähnten Zusammensetzung liegt bei ungefähr 62 Grad Celsius.

Hierbei kann der Pressvorgang des Ausgangsstoffes sowohl vor als auch nach der Behandlung mit dem Zusatzstoff durchgeführt werden. Die Behandlung des Ausgangsstoffes kann durch Durchleitung oder Eintauchen in ein Bad mit dem flüssigen Zusatzstoff oder durch Aufspritzen dessen erfolgen. Es sei erwähnt, dass die Behandlung des Ausgangsstoffes mit flüssigem Zusatzstoff den Vorteil hat, dass das eingelagerte Wasser auf Grund des heißen Zusatzstoffs verdrängt wird, wodurch die Entzündbarkeit weiter verbessert wird. Die bevorzugte Temperatur des Zusatzstoffes bei der Durchführung der Behandlung liegt zwischen 70 und 90°C, kann aber auch höher oder niedriger sein.

Ein weiteren Zusatzstoff ist Paraffin. Paraffin ist eine wachsartige, brennbare, geruchlose, ungiftige und hydrophobe Substanz, die unter bestimmten und im Folgenden erklärten Voraussetzungen die für die Erfindung relevanten Eigenschaften aufweist.

Paraffin bezeichnet ein Gemisch aus Alkanen, d. h. gesättigten Kohlenwasserstoffen, wobei Paraffin allgemein die chemische Summenformel CₙH₂ₙ₊₂ aufweist, in der n zwischen 18 und 50 liegen kann. Je nach Länge der Kette, variiert die Schmelztemperatur zwischen 30 und 80°C und die Härte des Paraffins, mit der vorteilhaften Möglichkeit je nach Anwendung einen gewünschten Schmelzpunkt und Härtegrad zu wählen. Folglich ist das oben beschriebene Verfahren unverändert mit Paraffin durchführbar.

Paraffin ist in Kombination mit dem oben erläuterten Zusatzstoff verwendbar, wobei es sich herausgestellt hat, dass eine Mischung mit dem oben erwähnten Zusatzstoff mit einem maximalen Anteil von 50% Paraffin sehr gute Eigenschaften aufweist.

Weiterhin können in Fällen, in denen lediglich eine Erhöhung des Heizwertes gewünscht ist, pflanzliche und tierische Fette alleine oder in einem beliebigen Mischverhältnis verwendet werden. Nicht abschließende Beispiele hierfür sind Rapsöl, Rapsmethylesther, Sonnenblumenöl, Leinöl, Öl vom Ölbaum, Kokosnussöl oder Kokosnussfett, Palmölkerne, Sojaöl und alle Zusammensetzungen aus Palmitinsäure, Stearinsäure, Ölsäure, Myristinsäure und Linolsäure.

## Patentansprüche

1. Verfahren zur Herstellung eines Brennstoffes, welches folgende Verfahrensschritte aufweist:
a) Vorsehen eines Ausgangsstoffes in Form von Holz oder Holzkleinteilen,
b) Zugabe eines Zusatzstoffes, welcher Palmitinsäure, Stearinsäure, Laurinsäure, Myristinsäure und Ölsäure umfasst, wobei der Zusatzstoff die Säuren in folgenden Anteilen aufweist:
• min 50 % Palmitinsäure,
• min 40 % Stearinsäure,
• maximal 3 % Myristinsäure,
• maximal 1 % Laurinsäure, und
• Spuren von Ölsäure,
c) Pressen des Brennstoffes vor oder nach der Zugabe des Zusatzstoffes in eine bestimmte Form.

2. Verfahren gemäß Anspruch 1, wobei der Zusatzstoff auf mindestens seinen spezifischen Schmelzpunkt erhitzt wird.

## Claims

1. A method for producing a combustible, which comprises the following method steps:
a) providing a starting substance in the form of wood or small parts of woods,
b) adding an additive, which comprises palmitic acid, stearic acid, lauric acid, myristic acid and oleic acid, wherein the additive comprises the acids according to the following fractions:
• at least 50 % of palmitic acid,
• at least 40 % of stearic acid,
• at most 3 % of myristic acid,
• at most 1 % of lauric acid, and
• traces of oleic acid,
c) pressing the combustible before or after the addition of the additive into a specific shape.

2. The method according to claim 1, wherein the additive is heated up to at least its specific melting point.

## Revendications

1. Procédé de fabrication d'un combustible, qui comprend les étapes de procédé suivantes consistant à :
a) prévoir une matière de départ sous la forme de bois ou de petites pièces de bois,
b) ajouter un additif, qui comprend de l'acide palmitique, de l'acide stéarique, de l'acide laurique, de l'acide myristique et de l'acide oléique, l'additif comprenant les acides en les proportions suivantes :
• au minimum 50 % d'acide palmitique,
• au minimum 40 % d'acide stéarique,
• au maximum 3 % d'acide myristique,
• au maximum 1 % d'acide laurique, et
• des traces d'acide oléique,
c) presser le combustible avant ou après l'addition de l'additif sur une forme déterminée.

2. Procédé selon la revendication 1, dans lequel l'additif est chauffé au moins jusqu'à son point de fusion spécifique.
